# EUROPÄISCHE PATENTSCHRIFT

(11) **EP 1 484 224 B1**
(45) Veröffentlichungstag und Bekanntmachung des Hinweises auf die Patenterteilung: **13.08.2014**
(21) Anmeldenummer: 04018072.1
(22) Anmeldetag: 16.11.2001
(51) Int. Cl.: B60S 1/40

(54) **Anschlusselement zum gelenkigen Verbinden eines Wischblatts mit einem Wischerarm**
Connection element for a hinged connection of a wiper blade with a wiper arm
Élément de raccordement pour une liaison articulée d'un balai d'essuie-glace avec un bras d'essuie-glace

(30) Priorität: 28.12.2000 DE 10065124; 26.10.2001 WO PCT/DE01/04024
(43) Veröffentlichungstag der Anmeldung: 08.12.2004
(62) Teilanmeldung aus: 01272610.5
(73) Patentinhaber: ROBERT BOSCH GMBH, 70442 Stuttgart (DE)
(72) Erfinder: Holsbeekx, Philippe, 3300 Tienen (BE); Breesch, Frans, 3840 Borgloon (BE); Windmolders, Eric, 3510 Kermt (BE); Wilms, Christian, 3582 Beringen (Koersel) (BE); Op't Roodt, Inigo, 3500 Hasselt (BE); Beelen, Hans, 3540 Herk de Stad (BE); Vertongen, Robert, 3800 Sinterueiten (BE); Geling, Johnny, 3010 Kessel-Lo (BE); Weber, Matthias, 3300 Tienen (BE); Rapp, Harald, 77815 Buehl (DE); Kraemer, Godelieve, 76549 Huegelsheim (DE); Mayer, Juergen, 76571 Gaggenau (DE); Leutsch, Wolfgang, 77830 Buehlertal (DE); Baseotto, Michel, 3550 Hasselt (BE); Herinckx, Dirk, 3350 Linter (BE); De Block, Peter, 3545 Halen (BE); Verelst, Hubert, 3300 Tienen (BE)
(74) Vertreter: Waller, Stefan

(56) Entgegenhaltungen:
- EP-A2- 1 050 441
- WO-A-99/02383
- DE-A1- 2 311 143
- DE-A1- 2 313 689
- DE-A1- 19 729 862
- DE-B- 1 077 087
- FR-A- 820 156
- GB-A- 2 033 736
- NL-A- 238 399
- US-A- 2 176 373
- US-A- 2 741 792
- US-A- 3 431 579
- US-A- 3 872 537
- US-A- 3 928 887
- US-A- 4 028 770

## Beschreibung

### Stand der Technik

Die Erfindung betrifft ein Anschlusselement zum gelenkigen Verbinden eines Wischblatts zum Reinigen von Scheiben, insbesondere von Kraftfahrzeugen mit einem angetriebenen Wischerarm. Bei dem angesprochenen Wischblatt soll ein Tragelement für das gesamte vom Wischblatt bestrichene Wischfeld eine möglichst gleichmäßige Verteilung des vom Wischerarm ausgehenden Wischblatt-Anpressdrucks an der Scheibe gewährleisten. Durch eine entsprechende Krümmung des unbelasteten Tragelements - also wenn das Wischblatt nicht an der Scheibe anliegt - werden die Enden der im Betrieb des Wischblatts vollständig an der Scheibe angelegten Wischleiste durch das dann gespannte Tragelement zur Scheibe belastet, auch wenn sich die Krümmungsradien von sphärisch gekrümmten Fahrzeugscheiben bei jeder Wischblattposition ändern. Die Krümmung des Wischblatts muss also etwas stärker sein als die im Wischfeld der zu wischenden Scheibe gemessene stärkste Krümmung. Das Tragelement ersetzt somit die aufwendige Tragbügelkonstruktion mit zwei in der Wischleiste angeordneten der Querversteifung der gummielastischen Wischleiste dienenden Federschienen, wie sie bei herkömmlichen Wischblättern (DE 1505 257 A1) praktiziert wird. Ein Wischblatt mit einem solchen Tragelement soll auf einfache Weise unverlierbar an dem Wischerarm angeschlossen und von diesen wieder abgenommen werden können.

Um ein derartig ausgebildetes Wischblatt mit dem Wischerarm zu verbinden, muss dieses mit einem besonders ausgebildeten Anschlusselement versehen werden, mit dem es in der erforderlichen Weise am Wischerarm angeschlossen werden kann. Die Wandflächen des Anschlusselements sollen darüber hinaus für eine ordnungsgemäße Führung des Wischblatts sorgen, wenn es von dem Wischerarm quer zu seiner Längserstreckung über die zu wischende Scheibe verschoben wird, weil diese an Führungsflächen des Wischerarms anliegen. Da die in aller Regel sphärisch gekrümmte Windschutzscheibe eines Kraftfahrzeugs nicht den Abschnitt einer Kugeloberfläche darstellt, muss sich das Wischblatt gegenüber dem Wischerarm während seiner Wischbewegung ständig der jeweilige Lage und dem Verlauf der Scheibenoberfläche anpassen können. Deshalb ist die, eine Schwingbewegung um die Gelenkzapfenachse ermöglichende, leichtgängige Gelenkverbindung zwischen dem Wischerarm und dem Wischblatt notwendig.

Die Erfindung geht aus von einer Verbindungsvorrichtung als Anschlusselement zum gelenkigen Verbinden eines Wischblatts zum Reinigen von Scheiben, insbesondere von Kraftfahrzeugen mit einem angetriebenen Wischerarm, das einen zumindest abschnittsweise im wesentlichen T-förmigen Querschnitt aufweist, dessen T-Kopf dem Tragelement des Wischblatts zugewandt mit diesem direkt verbindbar ist, dessen T-Fuß sich in Längsrichtung des Wischblatts erstreckt und das mit der einen, als Gelenkbolzen ausgebildeten Gelenkhälfte versehen ist. Bei einer bekannten Vorrichtung dieser Art (DE 19 72 98 62 A1) sind die beiden Gelenkzapfen an ihren Mantelflächen jeweils mit zwei einander gegenüberliegenden Flächen versehen. Dadurch ist es möglich das Wischblatt mit diesen Zapfen in Lagerausnehmung des Wischerarms einzubringen, welche über auf den Abstand der Zapfenfläche voneinander abgestimmte Einführkanäle randoffen sind. Zum Verbinden des Wischblatts mit dem Wischerarm beziehungsweise zum Lösen des Wischblatts vom Wischerarm muss das Wischblatt allerdings in eine Position quer zur Wischerarmerstreckung um die Gelenkzapfenachse gedreht werden, damit die Zapfen durch die Einführkanäle in ihre Lagerausnehmungen gebracht werden können und das montierte Wischblatt in seiner Betriebslage an der Scheibe am Wischerarm unverlierbar gehalten ist. Dazu ist es aber nötig, den Wischerarm von der Scheibe wegzuklappen. Bei vielen Anwendungsfällen ist jedoch eine solche Klappbewegung des Wischerarms nicht möglich, weil beispielsweise der Wischerarm in seiner den Montagevorgang ermöglichenden Ablageposition am Scheibenrand unter einer Abdeckung der Fahrzeugkarrosserie liegt oder weil aus Kostengründen auf die Anordnung des Klappgelenks verzichtet werden soll.

Aus der US 3,431,579 und der DE 1 077 087 A sind Anschlusselemente zum gelenkigen Verbinden eines Wischerblattes mit einem Wischerarm bekannt, die einen Gelenkbolzen aufweisen.

### Vorteile der Erfindung

Ein wischblattseitige Anschlussmittel aufweisender Adapter kann zunächst mit dem Wischblatt verbunden werden, so dass er zum Wischblatt gehört. Die Ausbildung eines besonderen Gelenks zwischen Wischerarm und Wischblatt entfällt somit und die Funktionen Gelenkverbindung und Anschlussmittel werden voneinander getrennt und somit kompromisslos optimierbar. Dabei sind die beiden Wandflächen des Anschlusselements durch die Außenflächen am T-Fuss eines zumindest abschnittsweise im Querschnitt T-förmigen Bauteils gebildet, dessen T-Kopf dem Tragelement zugewandt, mit diesem verbunden ist. Weitere fertigungstechnische Vorteile ergeben sich dadurch, dass das Anschlusselement im Querschnitt gesehen zwei im wesentlichen rechtwinklige Hälften hat, die mit dem einen Winkelschenkel aneinander anliegend den T-Fuss und deren anderen Winkelschenkel zusammen den T-Kopf bilden. Dabei ist es zweckmäßig, wenn die beiden aus einem Metall bestehenden Hälften am T-Fuss einstückig miteinander verbunden sind.

Eine solche Verbindung kann beispielsweise kostengünstig dadurch erreicht werden, dass das Anschlusselement an den voneinander abgewandten Längskanten des T-Kopfes mit krallenartigen Fortsätzen versehen ist, welche die äußeren Längskanten des Tragelements umgreifen.

Wenn ein Adapter einen im wesentlichen U-förmigen Querschnitt hat, dessen beiden U-Schenkel den T-Fuß des Anschlusselements seitlich passend übergreifen, dessen U-Basis den T-Fuß des Anschlusselements überdeckt und in jedem der beiden U-Schenkel eine zu dessen freien Enden hin randoffene, schlitzartige Aussparung angeordnet ist, deren Schlitzenden Lageraufnahmen für die Gelenkzapfen bilden, ergeben sich große Führungsflächen zwischen dem zum Wischblatt gehörenden Adapter und dem mit dem Tragelement des Wischblatts verbundenen Anschlusselement, so dass eine spielfreie, ein gutes Wischbild sicherstellende Verbindung erreicht wird.

Aus den vorstehenden Ausführungen ergibt sich somit eine ganze Reihe von Merkmalen, die zum Aufbau einer leicht bedienbaren, kostengünstigen und spielfreien Gelenkverbindung zwischen Wischerarm und Wischblatt beitragen. Erfindungsgemäß ist eines der dazu notwendige Bauteile - nämlich das Anschlusselement - gemäß den Merkmalen des Anspruchs 1 ausgebildet. Ein bekanntes Anschlusselement dieser Art (DE 19 72 98 64 A1, auch veröffentlicht als WO 99/02383) weist an nur einer Seite des T-Fusses einen Gelenkbolzen zum Anschließen an den Wischerarm auf. Es ergibt sich somit eine außerhalb der Längsmittelachse des Wischblatts platzierte Gelenkverbindung, die sich hinsichtlich des vom Wischerarm ausgehenden Anpressdrucks bei bestimmten Scheibenkonfigurationen als nachteilig erweisen kann. Auch dienen dort die beiden voneinander abgewandten Wandflächen des T-Fusses nicht als Führungsflächen, die mit entsprechenden Gegenflächen des Wischerarms während des Wischbetriebs zusammenwirken. Die Wischblattführung wird dort alleine von dem kleinflächigen, einseitigen Ringbund des Gelenkbolzens übernommen. Wenn das Bauelement jedoch gemäß den Merkmalen des Anspruchs 1 weitergebildet ist, wird der vom Wischerarm ausgehende Anpressdruck gleichmäßig auf beide Zapfen übertragen und darüber hinaus eine ausgezeichnete Wischblattführung während des Wischbetriebs erreicht.

Weitere vorteilhafte Weiterbildung und Ausgestaltungen der Erfindung sind in der nachfolgenden Beschreibung von in der dazugehörigen Zeichnung dargestellten Ausführungsbeispielen angegeben.

### Zeichnung

In der Zeichnung zeigen:
- Figur 1: eine Seitenansicht eines am freien Ende eines Wischerarms angelenkten Wischblatts,
- Figur 2: eine Seitenansicht eines mit dem Wischblatt fest verbindbaren Anschlusselements,
- Figur 3: einen Schnitt entlang der Linie III-III durch das Anschlusselement gemäß Figur 2,
- Figur 4: eine Explosionsdarstellung der zu einer ersten Ausführungsform der Verbindungsvorrichtung gehörenden Einzelelemente,
- Figur 5: einen Querschnitt entlang der Linie V-V in Figur 4 durch das eine, als Adapter dienende Einzelelement,
- Figur 6: einen Schnitt entlang der Linie VI-VI durch die Anordnung gemäß Figur 5,
- Figur 7: einen Längsschnitt durch die zur Gelenkverbindung zusammengefügten Bauelemente gemäß Figur 4,
- Figur 8: ein anderes, als Wischblatthalter dienendes Bauelement gemäß Figur 4 im Längsschnitt,
- Figur 9: einen Längsschnitt durch das als Adapter dienende Bauelement gemäß Figur 4,
- Figur 10: eine andere Ausführungsform einer Gelenkverbindung in einer Anordnung gemäß Figur 4,
- Figur 11: einen Längsschnitt gemäß Figur 7 durch die Anordnung gemäß Figur 10,
- Figur 12: einen Längsschnitt gemäß Figur 8 durch den Wischblatthalter gemäß Figur 11 und
- Figur 13: einen Längsschnitt gemäß Figur 9 durch den Adapter gemäß Figur 10.

### Beschreibung der Ausführungsbeispiele

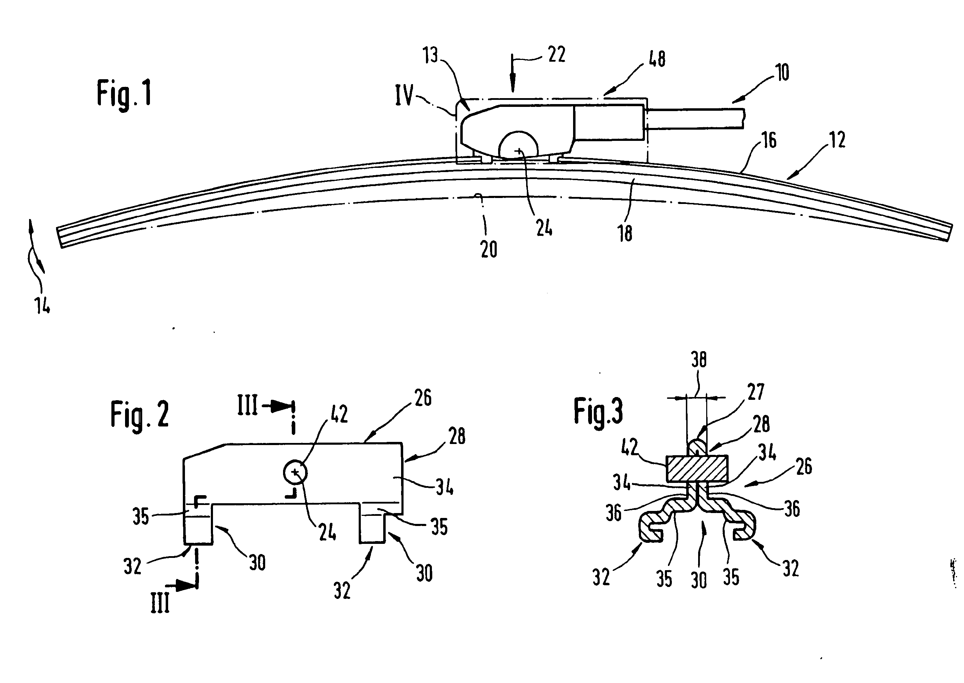

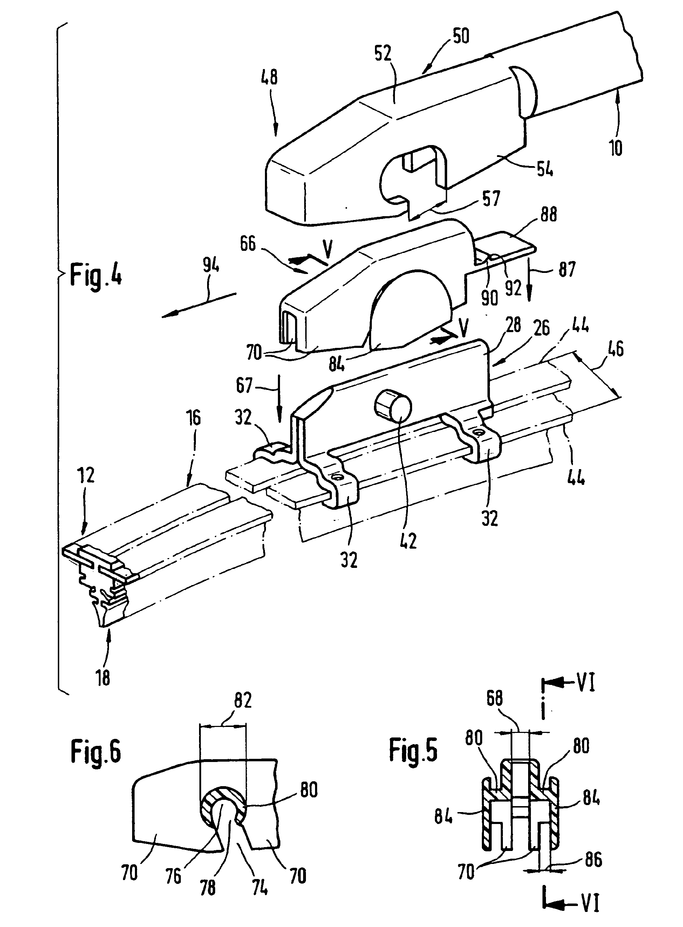

Figur 1 zeigt eine Seitenansicht des freien Ende eines von seinem anderen, nicht dargestellten Ende aus angetriebenen Wischerarms 10, an dem ein Wischblatt 12 über eine Gelenkverbindung 13 so angelenkt ist, dass es in Richtung des Doppelpfeils 14 schwingen kann. Das Wischblatt hat ein bandartig langgestrecktes, über seine Bandflächen gekrümmtes, federelastisches Tragelement 16, an dessen der Scheibe 20 zugewandten unteren konkaven Bandfläche 17 eine ebenfalls bandartig langgestreckte, gummielastische Wischleiste 18 längsachsenparallel angeordnet ist. Die zu wischende Oberfläche der Kraftfahrzeugscheibe ist in Figur 1 durch eine strichpunktierte Linie 20 angedeutet. Da die Linie 20 die stärkste Krümmung der Scheibenoberfläche darstellen soll ist klar ersichtlich, dass die Krümmung des mit seinen beiden Enden an der Scheibe 20 anliegenden, noch unbelasteten Wischblatts 12 stärker ist als die maximale Scheibenkrümmung. Unter einem über dem Wischerarm 10 in Richtung des Pfeiles 22 wirkenden Anpressdruck legt sich das Wischblatt mit seiner Wischleiste 18 über seine gesamte Länge an der Scheibenoberfläche 20 an. Dabei baut sich in aus Metall gefertigten Tragelement 16 eine Spannung auf, welche für eine ordnungsgemäße Anlage der Wischleiste 18 über deren gesamte Länge an der Scheibe sowie für eine gleichmäßige Verteilung des Anpressdrucks (Pfeil 22) sorgt. Weil die in aller Regel sphärisch gekrümmte Scheibe nicht einen Abschnitt einer Kugeloberfläche darstellt, muss sich das Wischblatt 12 gegenüber dem Wischerarm 10 während seiner Wischbewegung ständig der jeweiligen Lage und dem Verlauf der Scheibenoberfläche anpassen können. Deshalb ist die eine Schwingbewegung (Doppelpfeil 14) um die Gelenkachse 24 ermöglichende leichtgängige Gelenkverbindung zwischen Wischerarm und Wischblatt notwendig. Die Anordnung der Gelenk- oder Schwingachse ist dabei so getroffen, dass sie quer zur Längserstreckung des Wischerarms 10 und quer zur Richtung (Pfeil 22) des Anpressdrucks ausgerichtet ist. Zwei Ausführungsbeispiele einer solchen Gelenkverbindung sollen im Folgenden anhand der Figuren 4 bis 9 und 10 bis 13 näher erläutert werden.

Zum Wischblatt gehört noch ein erfindungsgemäßes Anschlusselement 26 (Figuren 2 und 3), das einen im Wesentlichen T-förmigen Querschnitt hat. Es hat somit einen T-Fuss 28 und einen T-Kopf 30, dessen Längserstreckung sich jedoch auf zwei vergleichsweise kurze, mit Abstand voneinander liegende Abschnitte beschränkt. An den von einander abgewandten Längskanten des T-Kopfes 30 sind krallenartige Fortsätze 32 angeordnet, auf deren Funktion später noch eingegangen wird. Wie insbesondere aus Figur 3 ersichtlich ist, ergibt sich beim Ausführungsbeispiel die T-Form des Anschlusselements 26 dadurch, dass ein Blechteil so gefaltet worden ist, dass der T-Fuss 28 durch zwei aneinander angelegte Blechabschnitte 34 gebildet ist, die in ihrem weiteren Verlauf abgewinkelt in die T-Kopfteile 32 übergehen. Es ergeben sich somit zwei symmetrisch zueinander angeordnete Hälften, welche durch die Faltung am T-Fuss 28 einstückig miteinander verbunden sind. Diese beiden aneinander anliegenden, im Wesentlichen rechtwinkligen Hälften des Anschlusselements 26 bilden somit mit ihrem einen Winkelschenkel 34 den T-Fuss 28 und die anderen Winkelschenkel 35 ergeben zusammen den T-Kopf 30. Die beiden voneinander abgewandten Außenflächen 36 des T-Fusses 28 liegen mit einem Abstand 38 voneinander der kleiner ist als die Breite 46 (Figur 4) des Tragelements 16. Der T-Fuss 28 des Anschlusselements 26 ist in seinem Längs-Mittelabschnitt in einer Bohrung 27 von einem Gelenkbolzen 42 durchdrungen, der fest mit dem Anschlusselement verbunden ist und dessen beiden Enden beidseitig aus dem T-Fuss 28 ragen (Figur 3). Es ist aber auch denkbar, den Gelenkbolzen beziehungsweise dessen beiden aus den Wänden oder Außenflächen 36 des Winkelschenkel 34 herausragenden Enden oder Gelenkzapfen 43 durch zwei separate, kurze Zapfen zu ersetzen, die ihrerseits beispielsweise durch mannigfache, dem Fachmann bekannte Verfahren - z.B. die Anordnung von Durchzügen, Prägemarken oder Fliesspresswarzen etc. - gebildet sein können.

Eine erste Ausführungsform der Gelenkverbindung zwischen Wischerarm 10 und Wischblatt 12 ist in Figur 4 in einer Explosionsdarstellung dargestellt. Die Darstellung beschränkt sich dabei auf die zum Verständnis der Gelenkverbindung 13 notwendigen Bereiche des Wischblatts 12. Dort ist auch ersichtlich, wie das Anschlusselement 26 mit dem Tragelement 16 des Wischblatts 12 verbunden ist. Das Wischblatt hat als Tragelement zwei zueinander parallel angeordnete in Längsnuten der Wischleiste 18 positionierte, in Längsrichtung über ihre Bandflächen gekrümmte Federschienen 44, welche zumindest im Längs-Mittelabschnitt mit äußeren Randstreifen aus den Längsnuten ragen. Das dort platzierte Anschlusselement 26 umfasst von der äußeren konvexen Bandfläche 15 des Tragelements 16 aus mit seinen krallenartigen Fortsätzen 32 die voneinander abgewandten, aus den Längsnuten ragenden äußeren Randstreifen 45 der Federschienen 44, wobei eine von den Krallen 32 ausgehende Klemmkraft und/oder Schweißstellen für eine unlösbare Verbindung zwischen den Federschienen 44 und dem Anschlusselement 26 sorgt. Weitere Befestigungsverfahren sind dem Fachmann geläufig. Dieses Anschlusselement 26 ist somit Teil des Wischblatts 12. Bei Betrachtung des Wischblatts 12 in Figur 4 ist auch klar, dass der Abstand 38 zwischen den beiden äußeren Wandflächen 36 (Figur 3) kleiner ist als die Breite 46 des Tragelements 16.

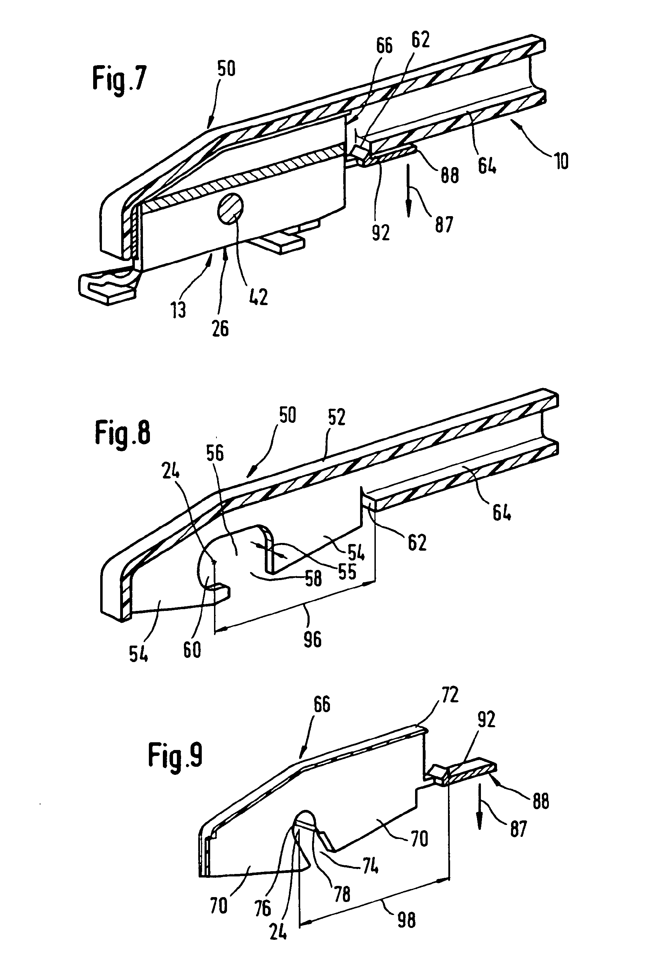

An seinem von seiner Antriebsseite abgewandten, freien Ende 48 (Figur 1) ist der Wischerarm 10 mit einem Wischblatthalter 50 versehen. Aus dem in Figur 8 dargestellten Längsschnitt durch den Wischblatthalter und unter gleichzeitiger Betrachtung des Wischblatthalters gemäß Figur 4 geht hervor, dass dieser einen U-förmigen Querschnitt hat. Er hat somit in diesem Bereich eine U-Basis 52, und zwei mit Abstand und parallel zueinander angeordnete U-Schenkel oder Wangen 54, in denen jeweils eine Ausnehmung 56 angeordnet ist, welche eine L-förmige Gestalt hat. Der eine L-Schenkel 58 der Ausnehmung 56 ist zum Tragelement 16 (Figur 4) hin randoffen, während sich der andere L-Schenkel 60 zum freien Ende des Wischerarms 10 beziehungsweise des Wischblatthalters 50 hin erstreckt. Auf der vom freien Ende des Wischblatthalters 50 abgewandten Seite der Ausnehmung 56 erstreckt sich mit Abstand von dieser eine Anschlagschulter 62 in den zwischen den Wangen 54 verbleibenden Raum des Wischblatthalters 50 (Figur 8). Die Anschlagschulter 62 ist am Ende einer nach innen gerichteten, abgewinkelten Fortführung 64 des U-Schenkels 54 ausgebildet und weist zum freien Ende des Wischblatts. In Verbindung mit Figur 4 ist klar ersichtlich, dass in Figur 8 eine Längshälfte des Wischblatthalters 50 dargestellt ist. Da die Längsschnitt-Ebene eine Symmetrieebene darstellt, ist weiter klar, dass die nicht dargestellte andere Längshälfte des Wischblatthalters 50 spiegelbildlich zu Figur 8 ausgebildet ist.

Aus den Figuren 4 bis 6 und 9 ist der Aufbau eines Adapters 66 ersichtlich, durch welchen die gelenkige Verbindung des Wischblatts 12 mit seinem Anschlusselement 26 am Wischblatthalter 50 des Wischerarms 10 ermöglicht wird. Bei Betrachtung der Figur 9 gilt es zu berücksichtigen, dass der Längsschnitt ebenfalls in einer Symmetrieebene liegt, so dass die fehlende, aber aus den Figuren 4 und 5 ersichtliche andere Längshälfte eine der Figur 9 entsprechende, spiegelbildliche Ausbildung hat. Weiter zeigen die erwähnten Figuren einen U-förmigen Aufbau des Adapters 66. Der Abstand 68 (Figur 5) zwischen seinen beiden U-Schenkeln 70 ist so gewählt, dass sich eine leichtgängige, spielfreie Führung des Adapters auf den T-Fuss 28 des Anschlusselements 26 ergibt, wenn dieser in seiner Arbeitsposition gebracht wird. In diese Arbeitsposition überdeckt die U-Basis 72 den T-Fuss 28 des Anschlusselements 26. In jedem der beiden U-Schenkel 70 des Adapters 66 sind miteinander deckungsgleiche, zu den freien Enden der U-Schenkel hin randoffene, schlitzartige Aussparungen 74 angeordnet wobei an den Schlitzenden Lageraufnahmen 76 für die Gelenkbolzen 42 des Anschlusselements 26 ausgebildet sind. Um eine betriebssichere Halterung des Adapters 66 auf den Gelenkbolzen 42 sicherzustellen, weisen die schlitzartigen Aussparungen 74 im Bereich der Lageraufnahmen 76 elastisch aufweitbare Engstellen 78 auf. Die schlitzartigen Aussparungen 74 bilden Einführkanäle, über welche die zapfenartigen Gelenkbolzen 42 in ihre Lageraufnahmen 76 eingebracht werden können. Die Aufweitbarkeit der Engstellen 78 wird beim Ausführungsbeispiel dadurch erreicht, dass der Adapter 66 aus einem elastischen Kunststoff hergestellt ist. Wie insbesondere die Figuren 5 und 6 zeigen, sind an den voneinander abgewandten Außenseiten der U-Schenkel 70 des Adapters 66 kragenartige Ansätze 80 angeordnet, welche die Lageraufnahmen über mindestens 180 DEG ringartig umgeben (Figur 6). Der Durchmesser 82 der kragenartigen Ansätze 80 ist auf die Breite 57 der Ausnehmung 56 abgestimmt. An den freien Enden der kragenartigen Ansätze 80 sind - wie insbesondere aus den Figuren 4 und 5 ersichtlich - schildartige, seitlich über die Ansätze 80 ragende Abdeckungen 84 angeordnet. Der Abstand 86 zwischen den Außenseiten der U-Schenkel 70 und den diesen zugekehrten Innenwänden der Abdeckungen 84 ist auf die Dicke 55 (Figur 8) der Wangen 54 des Wischblatthalters 50 abgestimmt. An seiner dem antriebsseitigen Ende des Wischerarms 10 zugewandten Ende ist der Adapter 66 mit einer einstückig mit diesem verbundenen, gegen eine Rückstellkraft elastisch auslenkbaren, blattartigen Zunge 88 versehen, deren Blattflächen etwa parallel zur Ebene des Tragelements 16 liegen. An der der U-Basis 72 des Adapters 66 zugewandten Blattfläche weist die Zunge 88 einen zahnartigen Vorsprung 90 auf, an dessen vom Adapterkörper abgewandten Seite eine Rastschulter 92 ausgebildet ist. Die Rastschulter 92 erstreckt sich quer zum Wischblatt 10 und in einer auf dem Tragelement 16 stehenden Ebene.

Zur Vorbereitung der Verbindung des Wischblatts 12 mit dem Wischerarm 10 wird zunächst der Adapter 66 auf das Bauelement 26 aufgebracht. Dazu wird der Adapter 66 in Richtung des Pfeiles 67 auf den T-Fuss 28 des Bauelements 26 aufgesteckt, wobei die zapfenartigen Gelenkbolzen 42 über die schlitzartigen Aussparungen 74 (Figur 6) nach Passieren der Engstelle 78 in ihrer Lageraufnahmen 76 gelangen. In dieser Montagestellung kann der Adapter 66 um das zur Sicherstellung der Wischblatt-Wischarbeit notwendige Winkelmass um die durch die Gelenkbolzen 42 gebildete Gelenkachse 24 in Richtung des Doppelpfeils 14 (Figur 1) schwingen. Der Adapter 66 bildet nun ein Teil des Wischblatts 12. Zum Anschließen an den Wischerarm 10 wird das Wischblatt samt seinem Adapter 66 entgegen dem Pfeil 67 (Figur 4) zum Wischblatthalter 50 hin bewegt derart, dass der Adapter 66 zwischen die U-Schenkel oder Wangen 54 des Wischblatthalters 50 gelangt. Dabei treten die kragenartigen Ansätze 80 in die Ausnehmung 56 des Wischblatthalters 50 ein, wobei die Wangen 54 zwischen die U-Schenkel 70 des Adapters 66 und die schildartigen Abdeckungen 84 der Ansätze 80 eintauchen. Wenn diese dem Pfeil 67 entgegen gerichtete Montagebewegung durch die L-förmige Gestalt der Ausnehmung 76 begrenzt ist, wird das Wischblatt in Richtung des Pfeils 94 (Figur 4) zum freien Ende 48 des Wischblatthalters 50 gezogen, bis die kragenförmigen Ansätze 80 an dem geschlossenen Ende des anderen L-Schenkels 60 der Ausnehmung 56 anliegen. In dieser nun erreichten End- oder Arbeitsposition des Wischblatts 12 am Wischerarm 10 federt die während des Montagevorgangs in Richtung des Pfeils 87 durch die Fortführung 64 zum Tragelement 16 des Wischblatts 12 hin ausgelenkte Zunge 88 in ihre Ausgangsposition zurück, wobei die am Vorsprung 90 ausgebildete Rastschulter 92 mit der Anschlagschulter 62 an der Fortführung 64 zusammenwirkt. Die Zunge 88 liegt dabei geschützt unterhalb des Wischerarms 10. Um eine ordnungsgemäße spielfreie Arbeitsposition des Wischblatts 12 am Wischerarm 10 zu gewährleisten ist eine sorgfältige Abstimmung des Abstandes 96 zwischen der Gelenkachse 24 und der Anschlagschulter 62 an der Fortführung 64 des Wischerarms auf den Abstand 98 zwischen der Gelenkachse 24 und der Rastschulter 92 des Adapters 66 erforderlich. Wenn das Wischblatt vom Wischerarm gelöst werden soll, muss lediglich die Zunge 88 in Richtung des Pfeiles 87 soweit ausgelenkt werden, dass die Rastschulter 92 die Anschlagschulter 62 freigibt. Danach ist das Wischblatt zunächst entgegen der Richtung des Pfeiles 94 verschiebbar und danach in Richtung des Pfeiles 67 vom Wischerarm 10 abzunehmen.

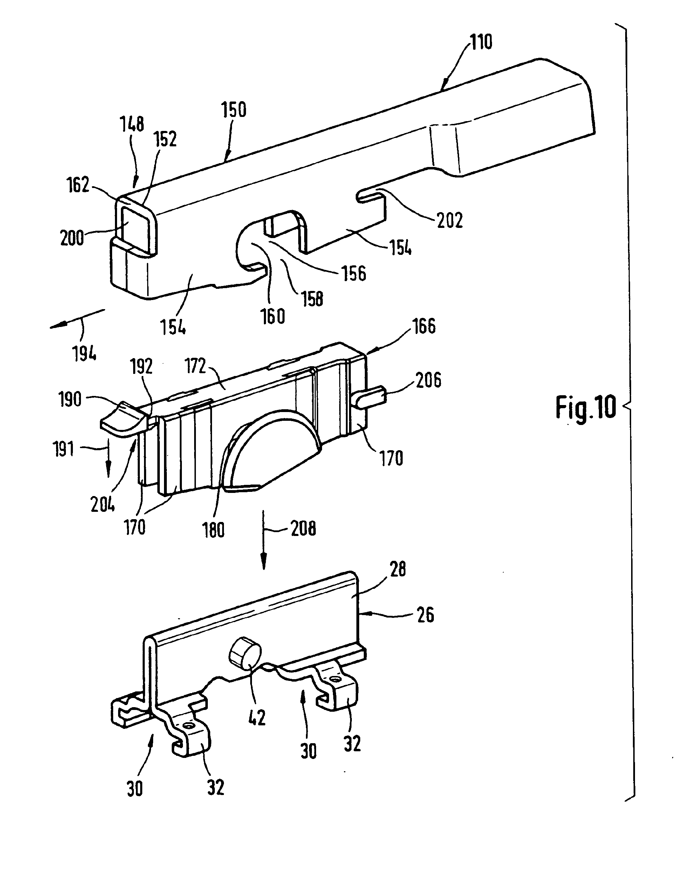

Bei der anderen, in den Figuren 10 bis 13 dargestellten Ausführungsform entspricht sowohl der Aufbau des Wischerarms 110 beziehungsweise dessen Wischblatthalters und der Aufbau des Adapters 166 im wesentlichen dem Aufbau des Wischblatthalters 50 beziehungsweise des Adapters 66 der oben beschriebenen ersten Ausführungsform. Deshalb werden alle dort schon beschriebenen und unverändert übernommenen Ausgestaltungen mit einer Bezugszahl bezeichnet, die um 100 größer ist als die Bezugszahlen der ersten Ausführungsform. Auch beschränkt sich die Beschreibung des zweiten Ausführungsbeispiels im Wesentlichen auf die Details, bei welcher die zweite Ausführungsform von der schon beschriebenen ersten Ausführungsform abweicht.

So hat der Wischerarm 110 an der an seinem freien Ende vorhandenen Querwand 111 einen Durchbruch 200 (Figur 10), wodurch die U-Basis 152 und Teilbereiche der U-Schenkel oder Wangen 154 mit einer Stirnfläche 162 enden und die Stirnfläche 162 der U-Basis eine wischerarmseitige Anschlagschulter bildet. Diese Anschlagschulter 162 tritt an die Stelle der Anschlagschulter 62 gemäß der ersten Ausführungsform. Weiter sind in den U-Schenkeln 154 des Wischblatthalters 150 Ausnehmungen 156 angeordnet, welche ebenfalls eine L-förmige Konfiguration haben und damit jeweils zwei L-Schenkel 158 und 160 aufweisen. An der von der Stirnfläche 162 abgewandten Seite hat der Wischblatthalter 150 in seinen U-Schenkeln 154 jeweils einen randoffenen Schlitz 202, der sich in Längsrichtung des Wischerarms und somit auch in Richtung des anderen L-Schenkels 160 erstreckt. Die Öffnung der Schlitze 202 ist von der Stirnfläche 162 abgewandt. Anstelle der Zunge 88 bei der ersten Ausführungsform, ist beim Adapter 160 eine federelastisch gegen eine Rückstellkraft auslenkbare Zunge 204 an dem Ende des Adapters 166 angeordnet, welches nach erfolgter Montage des Wischblatts 12 am Wischerarm im Bereich des freien Ende des Wischerarms 110 liegt. Sie ist als Verlängerung an der U-Basis 172 des aus einem elastischen Kunststoff gefertigten Adapters 166 angeordnet. An ihrer der U-Basis 172 zugewandten oberen Zungenfläche befindet sich ein zahnartiger Vorsprung 190 der sich quer zur Längserstreckung des Wischerarms 110 erstreckt und an dem eine in einer auf dem Tragelement stehenden Ebene ausgerichtete Rastschulter 192 ausgebildet ist, welche vom freien Ende 148 des Wischerarms 110 weg weist. Weiter ist der Adapter an seinen beiden U-Schenkeln 170 mit leistenartigen Vorsprüngen 206 versehen, welche den Schlitzen 202 in den U-Schenkeln 154 zugeordnet und an den voneinander abgewandten Außenflächen der U-Schenkel 170 angeordnet sind.

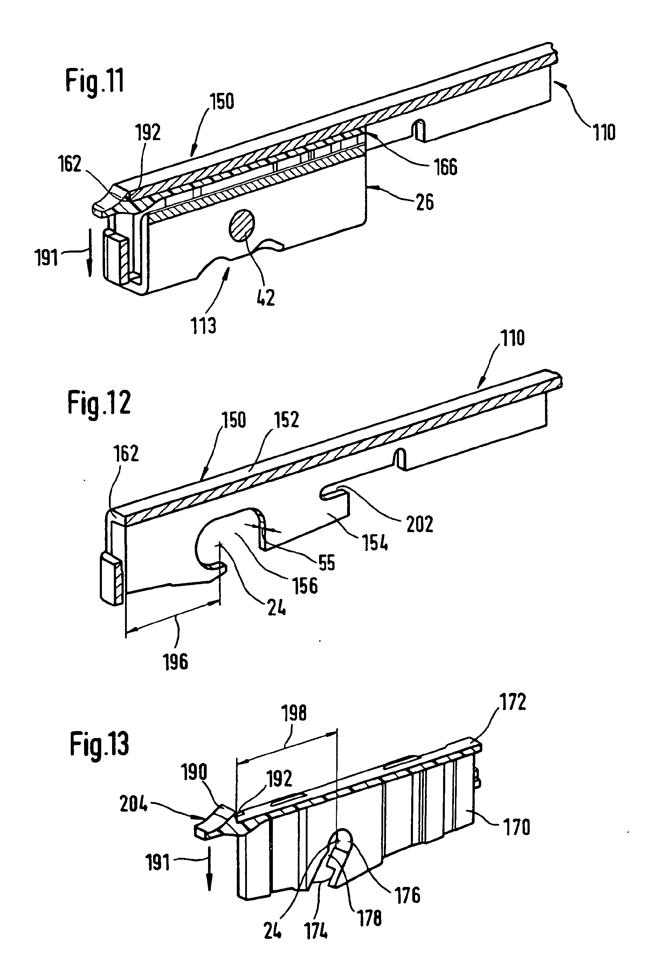

Zur Montage des Wischblatts am Wischerarm wird wie folgt vorgegangen. Zunächst wird in der schon beschriebenen Weise der Adapter 166 in Richtung des Pfeiles 208 auf das Anschlusselement 26 aufgebracht, welches dem schon beschriebenen Anschlusselement entspricht. Dabei gelangt der T-Fuss 28 des Bauelements 26 zwischen die U-Schenkel 170 des Adapters 166 und die zapfenartigen Gelenkbolzen 42 treten in die schlitzartigen Aussparungen 174 in den U-Schenkeln 170 ein (Figur 13), bis sie über die Engstellen 178 in ihre Lageraufnahmen 176 gelangen. In dieser Position ist nun der Adapter 166 durch die Wirkung der elastisch aufweitbaren Engstellen 178 unverlierbar am Wischblatt 12 gehalten, von dem in Figur 10 jedoch lediglich das Anschlusselement 26 dargestellt ist. Dabei ist die Abstimmung, genauso wie bei der schon beschriebenen Ausführungsform zwischen dem Adapter 166 und dem Anschlusselement 26 so getroffen, dass der Adapter gegenüber dem Anschlusselement 26 um die durch die Gelenkbolzen 42 gebildete Gelenkachse 24 in Richtung des Doppelpfeils 14 in Figur 1 pendeln kann. Der Adapter 166 gehört jetzt zum Wischblatt, das nun ohne Schwierigkeiten mit dem Wischerarm 110 beziehungsweise mit dessen Wischblatthalter 150 lösbar verbunden werden kann. Dazu wird das Wischblatt in der schon beschriebenen Weise so mit dem Wischblatthalter 150 zusammengefügt, dass die kragenartigen Ansätze 180 in die L-förmige Ausnehmung 156 gelangen. Wenn mit diesem Montageschritt die schon beschriebene Zwischenposition erreicht ist, wird das Wischblatt in Richtung des Pfeiles 194 (Figur 10) gezogen, bis die kragenartigen Ansätze 180 an der Endkante des anderen L-Schenkels 160 anschlagen. In dieser Position tritt die während des Einbringens des Adapters 166 in dem Wischblatthalter 150 in Richtung des Pfeiles 191 durch die U-Basis 152 in Richtung des Pfeiles 108 elastisch ausgelenkte Zunge aus dem Durchbruch 200 des Wischblatthalters 150 heraus und federt entgegen der Pfeilrichtung 191 in ihre Ausgangsposition zurück, wobei die Rastschulter 192 des Vorsprungs 190 mit der Stirnfläche 162 des Wischerarmhalters 150 spiellos zusammenarbeitet. Auch bei dieser Ausführungsform ist es wichtig, dass der Abstand 196 von der Gelenkachse 24 bis zur Stirnfläche 162 des Wischblatthalters 150 exakt auf den Abstand 198 von der Gelenkachse 24 zur Rastschulter 192 des Vorsprungs 190 des Adapters 166 abgestimmt ist. Während der Montagebewegung in Richtung des Pfeiles 194 treten dann auch gleichzeitig die leistenartigen Vorsprünge 206 des Adapters 166 in die ihnen zugeordneten schlitzartigen Aussparungen 202 in den Schenkeln 154 des Wischblatthalters 150 ein und sichern somit den Adapter 166 gegen eine unerwünschte Pendelbewegung im Wischblatthalter 150 um die Gelenkachse 24. Die Demontage des Wischblatts vom Wischerarm erfolgt in der schon angegebenen Weise, nachdem die Zunge 204 soweit in Richtung des Pfeiles 191 (Figur 11) ausgelenkt worden ist, dass die als Anschlagschulter dienende Stirnfläche 162 des Wischblatthalters 150 freigegeben worden ist.

Beiden Ausführungsbeispielen ist gemeinsam, dass an den beiden zapfenartigen Gelenkbolzen 42 ein um deren Längsachsen 24 pendelbare Adapter 66 beziehungsweise 166 gelagert ist, welcher Mittel zum Anschließen an den Wischblatthalter 50 beziehungsweise 150 des Wischerarms 10 aufweist. Die notwendige Pendelbewegung zwischen Wischerarm und Wischblatt erfolgt also zwischen dem mit dem Wischerarm verrasteten Adapter 26 und dem Anschlusselement 66.

## Patentansprüche

1. Anschlusselement zum gelenkigen Verbinden eines Wischblatts zum Reinigen von Scheiben insbesondere von Kraftfahrzeugen mit einem angetriebenen Wischerarm, das einen zumindest abschnittsweise im wesentlichen T-förmigen Querschnitt aufweist, dessen T-Kopf dem Tragelement des Wischblatts zugewandt mit diesem direkt verbindbar ist, dessen T-Fuß sich in Längsrichtung des Wischblatts erstreckt und das mit der einen, als Gelenkbolzen ausgebildeten Gelenkhälfte versehen ist, wobei
der Gelenkbolzen zwei zueinander koaxial ausgerichtete aus den beiden voneinander abgewandten Wandflächen (36) des T-Fußes (28) vorspringende Zapfen zum gelenkigen Verbinden von weiteren Gelenkmitteln aufweist und die Wandflächen (36) des T-Fußes (28) Führungsflächen für den Wischerarm bzw. einen Adapter bilden, wobei das Anschlusselement (26), im Querschnitt gesehen zwei im wesentlichen rechtwinklige Hälften hat, die mit den einen Winkelschenkeln (34), aneinander anliegend dessen T-Fuß (28) und deren andere Winkelschenkel (35) dessen T-Kopf (30) bilden und die beiden aus einem Metall bestehenden Hälften des Anschlusselements (26) am T-Fuß (28) einstückig miteinander verbunden sind.

2. Anschlusselement nach Anspruch 1, **dadurch gekennzeichnet, dass** an den beiden voneinander abgewandten Längskanten des T-Kopfes krallenartige, zu der vom T-Fuß (28) abgewandten Seite des T-Kopfes (30), gekrümmte Fortsätze (32) angeordnet sind.

3. Anschlusselement nach Anspruch 1 oder 2, **dadurch gekennzeichnet, dass** die beiden Zapfen durch die Endabschnitte eines Bolzens (42) gebildet sind, der den T-Fuß (28) des Anschlusselements (26) in einer Bohrung (27) durchdringt.

## Claims

1. Connection element for the hinged connection of a wiper blade for cleaning windows, in particular of motor vehicles, to a driven wiper arm which has a cross section which is substantially T-shaped at least in sections and the T head of which, facing the supporting element of the wiper blade, can be connected directly to said supporting element, and the T foot of which extends in the longitudinal direction of the wiper blade, and which is provided with the one hinge half, which is in the form of a hinge bolt, wherein the hinge bolt has two pins which are oriented coaxially to each other, project from the two mutually remote wall surfaces (36) of the T foot (28) and are intended for the hinged connection of further hinge means, and the wall surfaces (36) of the T foot (28) form guide surfaces for the wiper arm or an adapter, wherein the connection element (26), as seen in cross section, has two substantially right-angled halves which, by the one angle limbs (34) bearing against each other, form the T foot (28) of said connection element and the other angle limbs (35) of which halves form the T head (30) of said connection element, and the two halves of the connection element (26), said halves being composed of a metal, are connected integrally to each other at the T foot (28).

2. Connection element according to Claim 1, **characterized in that** claw-like extensions (32) which are curved with respect of that side of the T head (30) which faces away from the T foot (28) are arranged on the two mutually remote longitudinal edges of the T head.

3. Connection element according to Claim 1 or 2, **characterized in that** the two pins are formed by the end sections of a bolt (42) which penetrates the T foot (28) of the connection element (26) in a bore (27).

## Revendications

1. Élément de raccordement pour une liaison articulée d'un balai d'essuie-glace pour essuyer des vitres, en particulier de véhicules automobiles, comprenant un bras d'essuie-glace entraîné, qui présente une section transversale au moins en partie essentiellement en forme de T, dont la tête de T, tournée vers l'élément de support du balai d'essuie-glace, peut être directement reliée à celui-ci, dont la base de T s'étend dans la direction longitudinale du balai d'essuie-glace et qui est pourvu de l'une des moitiés d'articulation réalisées sous forme de boulon d'articulation,
le boulon d'articulation présentant deux tourillons orientés coaxialement l'un par rapport à l'autre et faisant saillie depuis les deux surfaces de paroi (36) opposées l'une à l'autre de la base du T (28), en vue de la liaison articulée d'autres moyens d'articulation et les surfaces de paroi (36) de la base du T (28) formant des surfaces de guidage pour le bras d'essuie-glace ou pour un adaptateur, l'élément de raccordement (26), vu en section transversale, présentant deux moitiés essentiellement à angle droit, qui forment avec les unes des branches coudées (34), en appui l'une contre l' autre, la base du T (28) de celui-ci et dont les autres branches coudées (35) forment la tête du T de celui-ci. (30) et les deux moitiés de l'élément de raccordement (26) constituées d'un métal étant reliées d'une seule pièce l'une à l'autre au niveau de la base du T (28).

2. Élément de raccordement selon la revendication 1, **caractérisé en ce qu'**au niveau des deux arêtes longitudinales opposées l'une à l'autre de la tête du T sont disposées des saillies courbes (32) de type griffes vers le côté de la tête du T (30) opposé à la base du T (28).

3. Élément de raccordement selon la revendication 1 ou 2, **caractérisé en ce que** les deux tourillons sont formés par les portions d'extrémité d'un boulon (42) qui traverse la base du T (28) de l'élément de raccordement (26) dans un alésage (27).
